# EUROPEAN PATENT APPLICATION

(11) **EP 3 789 146 A1**
(43) Date of publication of application: **10.03.2021**
(21) Application number: 20191899.2
(22) Date of filing: 20.08.2020
(51) Int. Cl.: B23D 79/02, B23C 3/12, B29C 37/04

(54) **A VERSATILE SCRAPER HEAD**

(30) Priority: 20.08.2019 TR 201912516
(71) Applicant: Kaban Makina Sanayi ve Ticaret Limited Sirketi, Istanbul (TR)
(72) Inventor: Kaban, Salim, Istanbul (TR)
(74) Representative: Yavuzcan, Alev

(57) **Abstract**

The present invention relates to a versatile scraper head (1) for cleaning of burrs located in the inner and/or outer area of a profile formed during joining of PVC profiles and shaping of the profile.

## Description

### Technical Field

The present invention relates to a versatile scraper head that provides cleaning of burrs located in the inner and/or outer area of the profile formed during joining of PVC profiles and shaping of the profile.

### Prior Art

Synthetic profiles made of polyvinyl chloride (PVC) material are used in the windows at the present time. PVC profiles are heated to a certain temperature by means of a heater plate and/or resistance, and then the heated areas are joined together by applying pressure with a predetermined pressure value. Burrs are formed at the connection of the profiles formed during this process. In today's applications, there are machines that allow the burrs formed to be scraped. These machines clean the burrs formed in the outer part of the profile by scraping. However, these machines can only clean the outer part of the joined profile and cannot clean the burrs formed in the inner part of the profile. In addition, the sharp structure formed in the outer areas by joining the profiles causes damage to the curtain and/or tulle if PVC profiles are set to the curtain and/or tulle.

Therefore, a versatile scraper head, which allows cleaning the burrs in the inner and/or outer area of the PVC profiles after welding and shaping the pointed areas of the PVC profiles, is required in the state of the art.

In the Turkish patent document No TR2018/08540, which is in the state of the art, a scraper mechanism that ensures the cleaning of burrs formed after welding of PVC profiles is mentioned. In the invention No TR2018/08540, the burrs that form on the profile are scraped and cleaned by means of blades of the machine.

### Short Description of Invention

The object of the present invention is to realize a versatile scraper head that allows the cleaning of burrs formed in the inner and/or outer area of the profile when joining the PVC profiles.

Another object of the invention is to realize a versatile scraper head that allows cleaning and/or shaping of the profile corners by cutting and/or scraping the sharp ends of the joined PVC profiles.

### Detailed Description of Invention

"A Versatile Scraper Head" that was created for achieving intention of this invention was demonstrated in the enclosed figures, and they consist of
Figure-1 is a view of a versatile scraper head on the scraper machine according to the invention.
Figure-2 is a top view of a versatile scraper head on the scraper machine according to the invention.

Parts included in the figures are individually enumerated and their equivalents were provided below.
1. Scraper head
2. Body
3. A first blade
4. A second blade
S: Scraper machine P: Support plate. B: Scraper blade.

The subject of the invention is a versatile scraper head (1) placed at the end of the scraper machine (S), which ensures the cleaning of burrs formed by processing the profiles and comprised of;
- at least one body (2) at the end of the scraper machine (S) facing the profile to be processed
- at least two first blades (3), located horizontally at the upper and lower ends of the body (2) and parallel to each other, allowing the cleaning of burrs formed during the processing of the profile by the movement of the scraper machine (S),
- at least one second blade (4) located on the body (2), which is perpendicular to the first blades (3) and that clears the burrs formed during the processing of the profile by the movement of the scraper machine (S).

In the preferred embodiment of the invention, the body (2) ensures that the first blade (3) and the second blade (4) stand together on the scraper machine (S) and are preferably connected to the scraper machine (S) with fasteners. The body (2) is located between the support plate (P) of the scraper machine (S) and the scraper blades (B). There are elements (not shown in the figures) on the body (2) to enable the installation of the first and/or second blades (3, 4). The body (2) is connected to the scraper machine (S) through its side not having the first and second blades (3, 4) on it. Thus, the movements of the blades (3, 4) are controlled by means of the body (2) placed on the scraper machine (S). The scraper machine (S) has a pneumatic structure and allows the body (2) to move using the gas pressure.

In the preferred embodiment of the invention, the body (2) is an independent piece from the scraper machine (S) and is connected to the processing end of the scraper machine (S) by means of a coupling apparatus, such as screw-nut and/or clamping elements, of the state of the art.

In another preferred embodiment of the invention, the body (2) is an independent piece from the scraper machine (S) and is fixed by welding to the profile processing end of the scraper machine (S).

In another preferred embodiment of the invention, the body (2) is part of the scraper machine (S) and is produced to coalesce with the scraper machine (S).

The first blade (3) in a versatile scraper head (1), which is the subject of the invention, moves by connecting to the scraper machine (S) with the body (2). Thus, burrs on the profile are cleaned by means of the first knife (3) moved. In the preferred embodiment of the invention, the first blade (3) is located in the upper and lower area of the body (2). The first blade (3) is moved up and down on the profile by means of the scraper machine (S) and removes the burrs inside the profile by cutting and/or scraping and shapes the profile by cleaning. Thus, the spike and/or sharp form of the profile is cut and/or scraped off with the first knife (3) and brought to a radiused structure.

The second blade (4) in a versatile scraper head (1) of the present invention is connected to the scraper machine (S) by the body (2) and moves together with the scraper machine (S). Thus, the profile is cut and/or scraped by means of the second knife (4) moved. In the preferred embodiment of the invention, the second blade (4) is placed perpendicular to the end of the body (2) facing the profile. The second blade (4) is located on the body (2) corresponding to the connection corner of the profile and cleans and/or shapes the profile by guiding up and down through the scraper machine (S) by cutting and/or scraping the outer surface of the profile.

In the preferred embodiment of the invention, the sharp end of the second blade (4) facing the profile is triangular, corresponding to the corner of the profile, and/or is cut to have a predetermined diameter in the form of the desired circle pf the profile and shapes the connection areas of the profile. Thus, the burrs at the connection points of the profile are cleaned and the pointed corners are cut and the profile corner is rounded depending on the radius of the second blade (4).

In a versatile scraper head (1) of the present invention, there is a body (2) at the end of the scraper machine (S) that contacts the profile, and there are first and/or second blades (3, 4) on this body (2). The first blade (3) touches the inner areas of the profile during the up and down movement of the scraper machine (S), thereby cutting and/or scraping the burrs located in the inner area of the profile after welding. In addition, the second blade (4) on the body (2) rounds the sharp edges of the profile by ensuring the cutting and/or scraping of the profile by contacting the connection corners of the profile along the up and down movement.

Under frame of these basic concepts, it is possible to progress various practices relevant with "A Versatile Scraping Head (1)", subject of this invention, it may not be limited to samples explained here, it is actually as set forth at the claims.

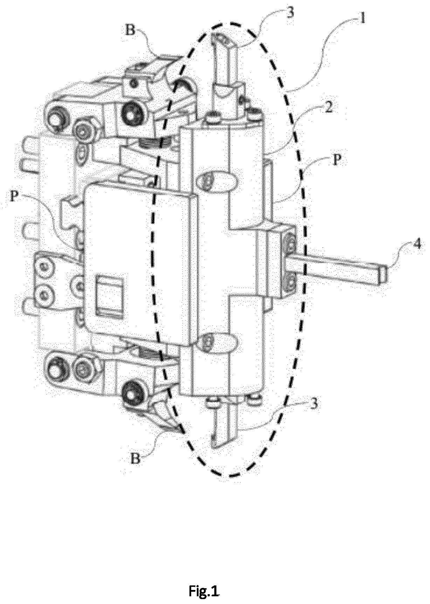

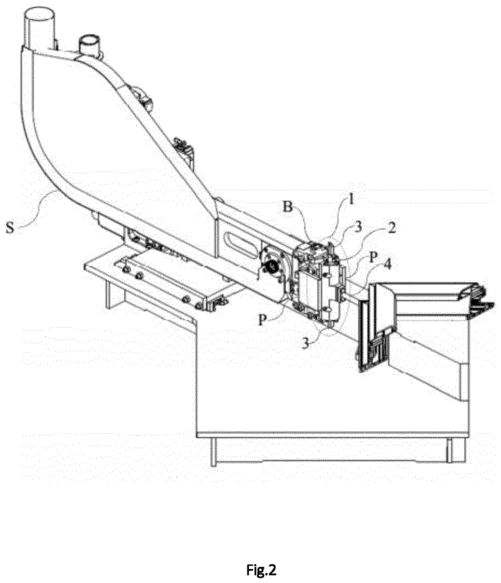

## Claims

1. A versatile scraper head (1) according to the invention, whereby placed at the end of the scraper machine (S), which ensures the cleaning of burrs formed by processing the profiles and **characterized in that** at least one body (2) at the end of the scraper machine (S) facing the profile to be processed,
- at least two first blades (3), located horizontally at the upper and lower ends of the body (2) and parallel to each other, allowing the cleaning of burrs formed during the processing of the profile by the movement of the scraper machine (S),
- at least one second blade (4) located on the body (2), which is perpendicular to the first blades (3) and that clears the burrs formed during the processing of the profile by the movement of the scraper machine (S).

2. A scraper head (1) as in Claim 1, **characterized in that** the first blade (3) and the second blade (4) stand together on the scraper machine (S) and by the body (2) which is preferably connected to the scraper machine (S) with fasteners.

3. A scraper head (1) as in Claim 1 or 2, **characterized in that** the body (2) located between the support plate (P) and the scraper blades (B) of the scraper machine (S).

4. A scraper head (1) as in any one of the above claims, **characterized in that** the body (2), on which the first and/or second blades (3, 4) are provided with elements to be fitted.

5. A scraper head (1) as in any one of the above claims, **characterized in that** the body (2) connected to the scraper machine (S) by the absence of the first and second blades (3, 4).

6. A scraper head (1) as in any of the above claims, **characterized in that** the body (2) is an independent piece from the scraper machine (S) and is connected to the processing end of the scraper machine (S) by means of a coupling apparatus, such as screw-nut and/or clamping elements, of the state of the art.

7. A scraper head (1) as in any one of claims 1 to 5, **characterized in that** the body (2) welded to the profile processing end of the scraper machine (S) which is independent of the stripping machine (S).

8. A scraper head (1) as in any one of Claims 1 to 5, **characterized in that** the body (2) is part of the scraper machine (S) and is produced as coalesce with the scraper machine (S).

9. A scraper head head (1) as in any one of the above claims, **characterized in that** a first blade (3) that moves by connecting the body (2) to the scraper machine (S).

10. A scraper head (1) as in any one of the above claims, **characterized by** a first blade (3) located in the upper and lower area of the body (2).

11. A scraper head (1) as in any of the above claims, **characterized in that** the first blade (3) is moved up and down on the profile by means of the scraper machine (S) and removes the burrs inside the profile by cutting and/or scraping and shapes the profile by cleaning.

12. A scraper head (1) as in any one of the above claims, **characterized in that** the second blade (4) that moves together with the scraper machine (S) by connecting to the scraper machine (S) through the body (2).

13. A scraper head (1) as in any one of the above claims, **characterized in that** the second blade (4) placed perpendicular to the end of the body (2) facing the profile.

14. A scraper head (1) as in any of the above claims, **characterized in that** the second blade (4) located on the body (2) corresponding to the connection corner of the profile, cleaning and/or shaping the profile by cutting and/or scraping the profile outer surface by directing it up and down through the scraper machine (S).

15. A scraper head (1) as in any of the above claims, **characterized in that** the sharp end of the second blade (4) facing the profile is triangular, corresponding to the corner of the profile, and/or is cut to have a predetermined diameter in the form of the desired circle pf the profile and shapes the connection areas of the profile.
